# EUROPÄISCHE PATENTSCHRIFT

(11) **EP 1 949 838 B1**
(45) Veröffentlichungstag und Bekanntmachung des Hinweises auf die Patenterteilung: **01.09.2010**
(21) Anmeldenummer: 08001180.2
(22) Anmeldetag: 23.01.2008
(51) Int. Cl.: A47L 9/00, A47L 9/32, B62K 3/00, B62K 19/40, A47L 9/06

(54) **Reinigungsgerät**
Cleaning device
Appareil de nettoyage

(30) Priorität: 24.01.2007 DE 102007003573; 23.05.2007 DE 102007023947
(43) Veröffentlichungstag der Anmeldung: 30.07.2008
(73) Patentinhaber: VERMOP Salmon GmbH, 82205 Gilching (DE)
(72) Erfinder: Salmon, Dirk, 82205 Gilching (DE)
(74) Vertreter: HOFFMANN EITLE

(56) Entgegenhaltungen:
- EP-A- 1 180 342
- DE-A1- 19 611 264
- FR-A- 697 945
- US-A- 5 651 558
- US-A1- 2004 103 493

## Beschreibung

### Gebiet der Erfindung

Die Erfindung betrifft ein Reinigungsgerät, das zum Reinigen größerer Flächen, beispielsweise von Fluren von Krankenhäusern oder Bürogebäuden, Fabrikhallen oder ähnlichem eingesetzt wird.

Die Reinigung großer Flächen wird normalerweise durch kommerzielle Reinigungsbetriebe durchgeführt. Dabei kommen im allgemeinen entweder manuell geführte Reinigungssysteme oder Reinigungsmaschinen zum Einsatz. Welche dieser Alternativen bevorzugt wird, richtet sich nach der Größe und Zugänglichkeit der zu reinigenden Fläche. Bei kleineren oder verwinkelten Räumlichkeiten wird in der Regel auf manuell geführte Reinigungssysteme, wie z.B. Wischmopsysteme oder Staubsauger zurückgegriffen. Sind große, unverstellte Flächen zu reinigen, werden bevorzugt Reinigungsmaschinen eingesetzt, die wiederum hinsichtlich ihrer Größe und Funktionalität dem Umfang der durchzuführenden Reinigungsarbeiten angepasst sind.

### Stand der Technik

In der Technik sind sowohl manuell geführte Reinigungssysteme sowie Reinigungsmaschinen gut bekannt.

Im Falle von Saugsystemen können als manuell geführte Reinigungssysteme herkömmliche Staubsauger eingesetzt werden, wohingegen für sehr große Flächen fahrbare Reinigungsmaschinen bekannt sind.

Bei großen Flächen werden meist investitionsintensive Reinigungsmaschinen eingesetzt. Es besteht daher ein Bedürfnis nach Reinigungsmaschinen, die für große Flächen geeignet sind, gleichzeitig aber hohe investitions-, Wartungs- und Betriebskosten vermeiden.

Aus der US 5,651,558 A ist ein Rollstuhl bekannt, an den verschiedene Gerätschaften, wie z.B. ein herkömmlicher Staubsauger, angebracht werden können. Ein Benutzer kann sich somit auf dem mit Muskelkraft angetriebenen, lenkbaren Fahrgerät bewegen und dabei den Staubsauger bedienen, der in bequemem Abstand vor dem Rollstuhl geführt wird. Alternativ zu einem Staubsauger können auch andere Reinigungsgeräte wie z.B. Besen an dem Rollstuhl angebracht werden. Die US 5,651,558 A stellt den nächstkommenden Stand der Technik dar.

### Darstellung der Erfindung

Der Erfindung liegt die Aufgabe zugrunde, ein Sauggerät für die Reinigung von größeren Flächen vorzusehen, das sowohl hohe Investitions-, Wartungs- und Betriebskosten vermeidet als auch die Arbeitsbelastung der Reinigungsperson gering hält.

Diese Aufgabe wird durch ein Reinigungsgerät mit den Merkmalen des Anspruchs 1 gelöst. Bevorzugte Ausführungsformen der Erfindung folgen aus den übrigen Ansprüchen.

Das erfindungsgemäße Reinigungsgerät umfasst einen batteriebetriebenen Sauger sowie einen mit Muskelkraft getriebenen lenkbaren Roller. Der Sauger ist hierbei auf Rädern fahrbar und mit dem Roller verbunden. Das Reinigungsgerät umfasst weiterhin eine Saugdüse im Bereich der Lenkachse des Rollers. Ein derartiges Reinigungsgerät ist einerseits von einer externen Spannungsversorgung unabhängig, so dass bei größeren Flächen ein wiederholtes Lösen der Stromverbindung und erneutes Einstecken des Reinigungsgeräts entfallen kann. Weiterhin ist der auf Rädern fahrbare Sauger mit einem mit Muskelkraft angetriebenen, lenkbaren Fahrgerät verbunden, so dass eine Reinigungsperson mit geringem Kraftaufwand größere Strecken zurücklegen kann. Das Anordnen der Saugdüse im Bereich der Längsachse ermöglicht es, auch im Eck- und Kantenbereich diese sehr präzise zu führen, da sie sich im Sichtbereich der das Reinigungsgerät bedienenden Reinigungsperson befindet. Da das Fahrgerät ein Roller mit einer Längsachse und einer Lenkstange ist, bietet dies den Vorteil, dass er aufgrund seiner kompakten Bauweise einfach transportiert werden kann und ein wendiges und einfach zu bedienendes Fahrgerät ist. Ein Roller zeichnet sich zudem durch verhältnismäßig stabile Fahreigenschaften aus und erfordert nur einen sehr geringen Wartungsaufwand, da aufgrund einer geringen Anzahl von Bauteilen geringe Verschleiß- und Ausfallerscheinungen zu erwarten sind. Die Lenkung des Rollers ist frei wählbar. Beispielsweise kann sie über eine Lenkung geschehen, bei der durch ein Kippen der Lenkstange um eine horizontale Achse eine Kurvenfahrt des Rollers eingeleitet wird. Alternativ dazu kann aber auch ein herkömmlicher Roller verwendet werden, bei dem die Kurvenfahrt durch ein Drehen der Lenkstange um eine vertikale Achse hervorgerufen wird. Die Anzahl der Räder des Rollers ist nicht beschränkt. Beispielsweise können jeweils ein Rad vorne und ein Rad hinten oder zwei Räder vorne und ein Rad hinten vorgesehen werden. Allerdings weist der Roller nach einer bevorzugten Ausführungsform zwei Vorderräder auf, was weiter dazu beiträgt, eine stabile, ruhige und richtungstreue Fahrt zu ermöglichen. Aus der EP 1 180 342 A1 ist ein Reinigungsgerät bekannt, das einen Roller mit einem Wischmop kombiniert.

Nach einer bevorzugten Ausführungsform der Erfindung ist die Saugdüse vor der Lenkachse angeordnet und mit der Lenkstange gekoppelt. Die Saugdüse ist somit nicht nur im Bereich der Lenkachse des Fahrgeräts angeordnet, sondern wird bei einer Lenkbewegung des Rollers mitbewegt, so dass durch gezielte Lenkbewegungen die Saugdüse in schwer zugängliche Bereiche bewegt werden kann.

Vorzugsweise weist das Reinigungsgerät weiterhin eine Einrichtung zum Anheben der Saugdüse des Saugers auf, insbesondere in Form einer Betätigungsstange oder eines Seilzugs. Ein Anheben der Saugdüse ist insbesondere dann vorteilhaft, wenn mit dem Reinigungsgerät Türen durchfahren werden sollen, Schwellen überwunden werden müssen oder andere Bodenunebenheiten auftreten, wie auch im Falle von Gegenständen auf dem Boden, die nicht eingesaugt werden sollen. In diesen Fällen ist es vorteilhaft, die Saugdüse kurzzeitig zum Überwinden des Hindernisses anzuheben. Dies Funktion ist aber auch dann vorteilhaft, wenn verschiedene Bodenbeläge zu pflegen sind und das Reinigungsgerät von einem Bereich, der gesaugt werden soll, über einen nicht zu saugenden Bereich zu einem weiteren, zu saugenden Bereich verfahren wird.

Vorzugsweise ist die Einrichtung zum Anheben der Saugdüse über ein Betätigungselement im Bereich der Lenkstange betätigbar. Der einfachste Fall eines derartigen Betätigungselements ist ein Griffhebel, wie er in Fahrrädern zur Betätigung der Bremse vorgesehen und bei normaler Griffposition eines Benutzers betätigbar ist.

Vorzugsweise weist das Reinigungsgerät einen flexiblen Saugschlauch zwischen Saugdüse und Sauger auf, der mittels

Halteklammern lösbar am Roller befestigt ist. Der Saugschlauch kann vorzugsweise mittels Halteklammern an der Standfläche des Rollers lösbar befestigt sein. Auf diese Weise wird sichergestellt, dass der Saugschlauch für das Reinigungspersonal nicht störend in Erscheinung tritt oder gar mit dem Boden in Kontakt gerät.

Der Roller weist dieser weiterhin eine Kupplungsvorrichtung zwischen Roller und Sauger in Fahrtrichtung hinten am Roller auf. Der batteriebetriebene Sauger wird somit hinter dem Roller hergezogen, während sich die Saugdüse vorne am Roller im Bereich der Längsachse befindet. In diesem Zusammenhang hat es sich als vorteilhaft erwiesen, den Sauger mit zwei starren Rädern sowie einem schwenkbaren Rad zu versehen, so dass im gekuppelten Zustand zwischen Roller und Sauger das schwenkbare Rad keinen Bodenkontakt besitzt. Mit anderen Worten wird im gekuppelten Zustand das Vorderteil des Saugers, in dessen Bodenbereich sich das schwenkbare Rad befindet, leicht angehoben, so dass der Sauger, ohne ein eigendynamisches Fahrverhalten entwickeln zu können, lediglich über die starren Räder im hinteren Bereich des Bodens des Saugers passiv hinter dem Roller nachgeführt wird.

Nach einer bevorzugten Ausführungsform der Erfindung weist der Kupplungsmechanismus zwischen Roller und Sauger zwei exzentrische Anbringungspositionen vor. Diese dienen dazu, dass die Reinigungsperson beim Anschieben des Rollers mit der Ferse nicht an den Sauger anstoßen kann. Zwei exzentrische Anbringungspositionen dienen dazu, dem Reinigungspersonal die Möglichkeit zu geben, den Sauger je nach Wunsch nach der einen oder der anderen Seite versetzt hinten am Roller anzubringen, abhängig davon, mit welchem Bein das Reinigungspersonal den Roller anschiebt.

Eine besonders bevorzugte Anbringungsalternative des Saugers am Fahrgerät stellt eine Kupplungsvorrichtung mit einem Kugelzapfen dar. Das Vorsehen eines Kugelzapfens ermöglicht es, Bodenunebenheiten und leicht winklig zueinander angeordnete Bodenabschnitte zu kompensieren, indem in gewissen Grenzen eine Schwenkbewegung zwischen dem Fahrgerät und dem Sauger möglich ist.

### Kurze Beschreibung der Zeichnungen

In den nachfolgenden Figuren wird die Erfindung rein beispielhaft beschrieben. Darin zeigen
- Fig. 1: eine schematische Ansicht eines erfindungsgemäßen Reinigungsgeräts in Form eines Rollers mit angekoppeltem Sauger;
- Fig. 2: das Reinigungsgerät nach Fig. 1, jedoch mit abgenommenem Sauger; und
- Fig. 3: das Reinigungsgerät nach Fig. 1, wobei eine Betätigungsvorrichtung zum Anheben der Saugdüse betätigt ist.

### Wege zur Ausführung der Erfindung

In den nachfolgenden Figuren werden jeweils dieselben Bauelemente mit denselben Referenzziffern bezeichnet.

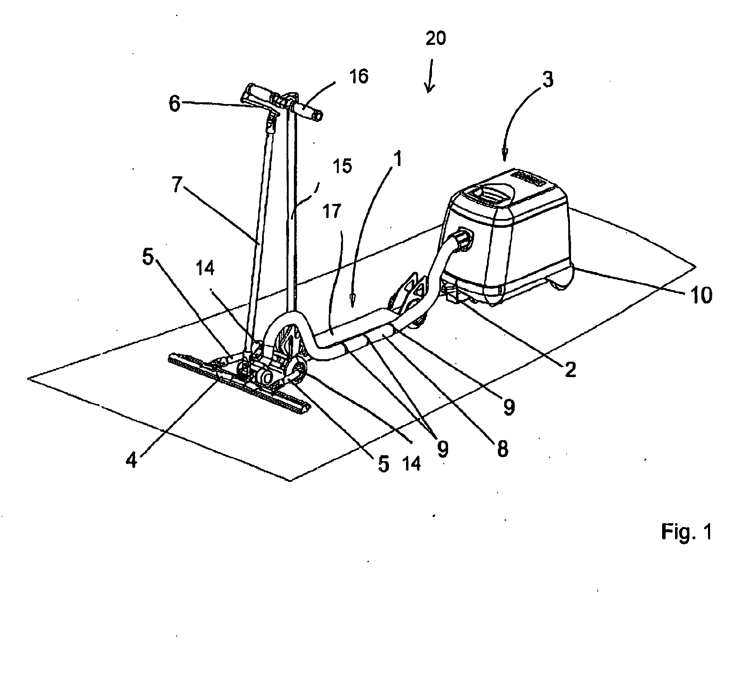

Das in Fig. 1 dargestellte Reinigungsgerät ist allgemein mit Referenzziffer 20 bezeichnet und umfasst einen Roller 1, der für einen profimäßigen Dauereinsatz ausgelegt ist, sowie einen Staubsauger 3, der über eine Ankoppelvorrichtung 2 mit dem Roller verbunden ist. Der Staubsauger 3 ist unabhängig vom Stromnetz betreibbar und kommt somit ohne Netzkabel aus. Die Energieversorgung des Saugers 3 erfolgt aus einer wiederaufladbaren Batterie.

Um den Schmutz vom Boden aufsaugen zu können, ist vor dem Roller 1 eine breite Saugdüse 4 angebracht, die bei Geradeausfahrt des Rollers quer zur Fahrtrichtung ausgerichtet ist und deren Breite sich je nach der Saugleistung des Saugers richtet und im Bereich von ca. 0,5m bis 1m liegt, um die gewünschte schnelle Reinigung großer Flächen zu ermöglichen. Die Saugdüse 4 ist direkt mit der Lenkvorrichtung des Rollers verbunden, so dass bei einer Lenkbewegung nach rechts oder links die Düse automatisch in diese Richtung mitgeschwenkt wird. Die Verbindung zwischen Saugdüse 4 und Roller erfolgt mit Hilfe von Befestigungsstreben 5, die direkt an den Radachsen der beiden vorne am Roller angeordneten Räder 14 angebracht sind. Durch die Befestigung der Saugdüse 4 an den Radachsen wird somit jede Lenkbewegung des Rollers direkt an die Saugdüse 4 übertragen.

Der Roller ist mit einer Lenkachse 15 sowie einer Lenkstange 16 versehen, an der Griffelemente zur leichteren Betätigung des Lenkers angebracht sein können. Ein Betätigungshebel 6 am Lenker 16 ist von dem Benutzer leicht zu greifen und wirkt über ein gelenkig am Betätigungshebel 6 angebrachtes Gestänge 7 mit der Saugdüse 4 dahingehend zusammen, dass bei Betätigung des Betätigungshebels 6 die Düse beim Fahren vom Boden abgehoben werden kann. Dies ist insbesondere dann notwendig, wenn Dinge auf dem Boden liegen, die nicht mit der Düse überfahren werden sollen, wie Kabel, Leitungen, aber auch Bodenabsätze, Türschwellen etc.

Zur Durchleitung der eingesaugten Luft ist zwischen der Saugdüse 4 und dem Sauger 3 ein flexibler Schlauch 8 angebracht, der so verlegt ist, dass er das Reinigungspersonal beim Fahren mit dem Roller nicht stört, aber auch zu Wartungs- und Reinigungszwecken leicht vom Roller abgenommen werden kann. Dazu sind verschiedene Halteklammern 9 vorgesehen, mit denen der flexible Schlauch 8 am Standteil 17 des Rollers angebracht ist.

Die Kupplungsvorrichtung 2 zwischen dem Roller und dem Sauger ist so gestaltet, dass in verbundenem Zustand zwischen Roller 1 und Sauger 3 der vordere Teil des Saugers in angekoppeltem Zustand keine Bodenberührung mehr besitzt und lediglich ein Nachlauf des Saugers 3 über die beiden hinteren Räder 10 erfolgt. Um herkömmliche Sauger 3 ausreichend wendig zu gestalten, wird in der Regel an der vorderen Seite des Saugers ein schwenkbares Rad 18 vorgesehen, das auf diese Weise angehoben wird, so dass dieses keinen störenden Einfluss auf die Bewegung des Saugers hinter dem Roller besitzen kann. Auf diese Weise ist kein spezieller Anhänger für den Sauger erforderlich, sondern der Sauger 3 bildet selbst mit den beiden starren Rädern 10 einen Anhänger des Rollers 1.

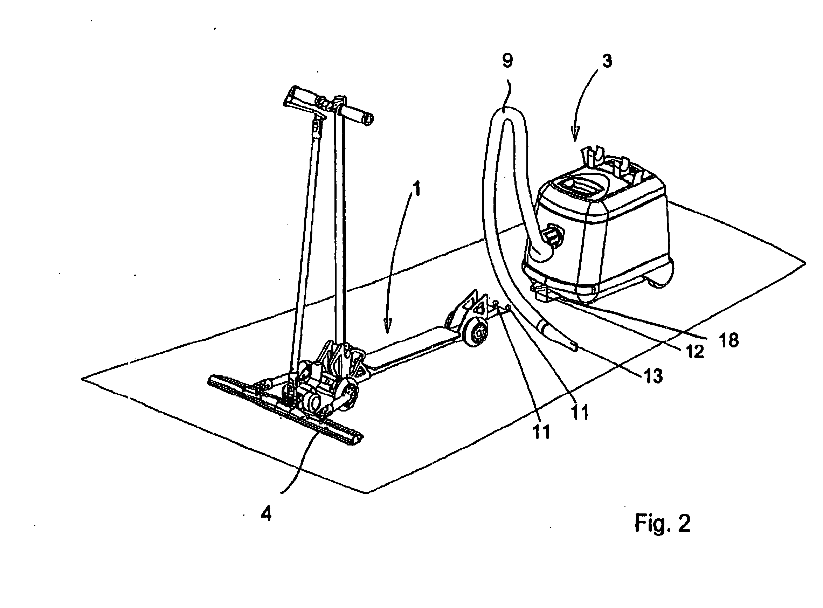

Da der Sauger 3 breiter als der Roller 1 ist, hat die am Roller 1 angebrachte Kupplungsvorrichtung 2 zwei Möglichkeiten der Anbindung, wie in Fig. 2 dargestellt und mit Referenzziffer 11 bezeichnet ist. Dies ist sinnvoll, um den Sauger 3 leicht seitlich in Bezug auf die Längsachse des Rollers 1 zu versetzen. Durch das seitliche Versetzen des Saugers 3 wird sichergestellt, dass beim Fahren mit dem Roller und beim Abstoßen mit dem Fuß keine Kollision mit dem Saugergehäuse stattfindet. Die zwei getrennten Möglichkeiten 11 der Anbindung dienen dabei dazu, je nach Bevorzugung durch die Bedienungsperson, den Sauger auf die eine oder andere Seite zu setzen und das Bein, mit dem das Abstoßen am Boden erfolgt, sich somit frei nach hinten bewegen kann, ohne mit der Ferse am Sauger 3 anzustoßen.

Die Kupplungsvorrichtung 11 zwischen Roller 1 und Sauger 3 besteht aus einem am Rollerheck nach oben stehenden Kugelzapfen und einer entsprechenden Aufnahme, die am Sauger befestigt ist und von oben eingehängt wird. Die Kupplung bildet durch den Kugelzapfen und der drehbaren Gegenaufnahme ein Gelenk, was Kurvenfahrten ermöglicht und das aus Roller 1 und Sauger 3 bestehende Reinigungsgerät wendig macht.

In Fig. 2 ist der Sauger 3 vom Roller 1 abgekoppelt dargestellt. Die Möglichkeit der Abkopplung ist erforderlich, um auch Rand- und Eckbereiche sowie mit Möbeln überstellte Flächen während des kompletten Reinigungsprozesses abdecken zu können. Obwohl, bedingt durch die Größe der kompletten Einheit bestehend aus Roller 1 und Sauger 3, der Haupteinsatz der Reinigungsvorrichtung vor allem bei großen Flächen und breiten Fahrwegen liegt, sollte für spezielle Reinigungsaufgaben der Staubsauger auch unabhängig vom Roller eingesetzt werden können. Dazu wird der Saugschlauch 9 von der am Roller 1 angebauten Saugdüse 4 abgesteckt und mit einer handgeführten Düse 13 verbunden und separat vom Roller 1 eingesetzt. In diesem Zusammenhang ist es auch sinnvoll, den Roller mit vier Rädern auszugestalten, um diesem getrennt von dem Sauger einen sicheren Stand zu verleihen.

Die lösbare Kupplungsvorrichtung 11 zwischen Roller 1 und Sauger 3 hat den weiteren Vorteil, die Größe der kompletten Einheit nach Beendigung der Reinigungsarbeit reduzieren zu können. Der Sauger wird dabei an der Kupplungsvorrichtung 11 vom Roller getrennt, der Saugschlauch 9 am Sauger entfernt und der Sauger 3 kann Platz sparend hochkant gelagert werden. Indem der Roller zusätzlich eine abklappbare Lenkstange besitzt, kann der Roller mit abgeklappter Lenkstange ebenfalls hochkant abgestellt werden, wodurch sich der benötigte Platz zum Abstellen des gesamten Reinigungsgeräts weiter verringert.

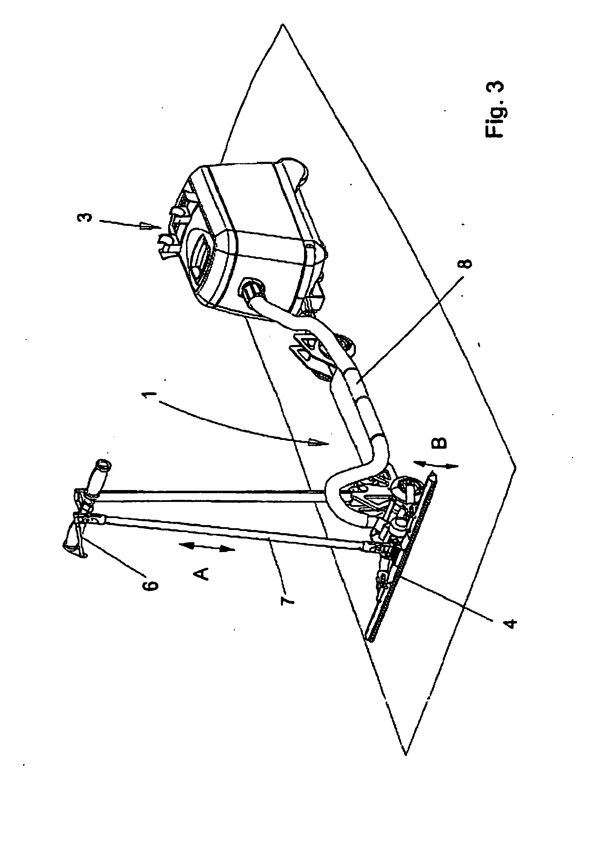

In Fig. 3 ist das in Fig. 1 dargestellte Reinigungsgerät bestehend aus Sauger 3 und Roller 1 dargestellt, wobei aber die Betätigung des Betätigungshebels 6 dargestellt ist, wodurch das Gestänge 7 in Pfeilrichtung A nach oben bewegt wird und die Saugdüse 4 eine Schwenkbewegung B nach oben ausführt, wodurch diese vom Boden angehoben wird. Der Betätigungshebel ist vorzugsweise in der in Fig. 3 dargestellten Position arretierbar, so dass auch größere Strecken mit angehobener Saugdüse zurückgelegt werden können, ohne dass die Bedienungsperson den Betätigungshebel 6 über den gesamten Zeitraum betätigen muss.

Das erfindungsgemäße Reinigungsgerät kann auch dahingehend modifiziert werden, dass zum sparsameren Umgang mit dem Energievorrat eine Signalverbindung zwischen dem Sauger und dem Roller hergestellt werden kann, so dass die Bedienungsperson von der Lenkstange aus auch den akkubetriebenen Sauger ausschalten kann, wenn dieser zeitweilig nicht benötigt wird.

Mit dem erfindungsgemäßen Reinigungsgerät lassen sich große Flächen, wie sie in Kaufhäusern, Hotels oder Verwaltungsgebäuden vorkommen, auf einfachere Weise absaugen und der Reinigungsvorgang in kurzer Zeit erledigen.

## Patentansprüche

1. Reinigungsgerät, umfassend einen Sauger (3); ein mit Muskelkraft angetriebenes, lenkbares Fahrgerät (1) auf Rädern (14), wobei der Sauger (3) auf Rädern (10) fahrbar ist und mit dem Fahrgerät (1) verbunden ist; und eine Saugdüse (4) im Bereich der Lenkachse (15) des Fahrgeräts (1);
**dadurch gekennzeichnet, dass**
das Fahrgerät ein Roller (1) mit einer Lenkachse (15) und einer Lenkstange (16) ist; und
der Sauger (3) batteriebetrieben ist.

2. Reinigungsgerät nach Anspruch 1,
**dadurch gekennzeichnet, dass**
der Roller (1) zwei Vorderräder (14) umfasst.

3. Reinigungsgerät nach Ansprüche 1 oder 2,
**dadurch gekennzeichnet, dass**
die Saugdüse (4) vor der Lenkachse (15) angeordnet ist.

4. Reinigungsgerät nach Anspruch 3, weiter umfassend eine Einrichtung (5, 6, 7) zum Anheben der Saugdüse (4) des Saugers (3), insbesondere in Form einer Betätigungsstange (6) oder eines Seilzugs.

5. Reinigungsgerät nach Anspruch 4,
**dadurch gekennzeichnet, dass**
die Einrichtung (5, 6, 7) zum Anheben der Saugdüse (4) über ein mit der Lenkstange (16) gekoppeltes Betätigungselement (6) betätigbar ist.

6. Reinigungsgerät nach einem der vorhergehenden Ansprüche, weiter umfassend einen flexiblen Saugschlauch (8) zwischen Saugdüse (4) und Sauger (3), der mittels Halteklammern (9) lösbar am Fahrgerät (1) befestigt ist.

7. Reinigungsgerät nach Anspruch 6, wobei der Saugschlauch (8) mittels Halteklammern am Standteil (17) des Rollers (1) lösbar befestigt ist.

8. Reinigungsgerät nach einem der vorhergehenden Ansprüche weiter umfassend eine Kupplungsvorrichtung (11) zwischen Roller (1) und Sauger (3) in Fahrtrichtung hinten am Roller (1).

9. Reinigungsgerät nach Anspruch 8, wobei der Sauger (3) zwei starre Räder (10) sowie ein schwenkbares Rad aufweist und so mit dem Roller (1) verbunden ist, dass das schwenkbare Rad (17) keinen Bodenkontakt besitzt.

10. Reinigungsgerät nach Anspruch 8 oder Anspruch 9,
**dadurch gekennzeichnet, dass**
die Kupplungsvorrichtung (11) zwei exzentrische Anbringungspositionen umfasst.

11. Reinigungsgerät nach einem der Ansprüche 8 bis 10,
**dadurch gekennzeichnet, dass**
die Kupplungsvorrichtung (11) einen Kugelzapfen umfasst.

12. Reinigungsgerät nach einem der vorhergehenden Ansprüche,
**dadurch gekennzeichnet, dass**
der Roller (1) zusätzlich eine relativ zur Standfläche (17) abklappbare Lenkstange (15) aufweist.

## Claims

1. Cleaning appliance, comprising a suction device (3), a steerable chassis (1) on wheels (14) which is driven by muscle force, the suction device (3) being movable on wheels (10) and connected to the chassis (1), and a suction nozzle (4) in the region of the steering shaft (15) of the chassis (1), **characterised in that** the chassis is a scooter (1) with a steering shaft (15) and a steering rod (16), and the suction device (3) is battery-operated.

2. Cleaning appliance according to claim 1, **characterised in that** the scooter (1) comprises two front wheels (14).

3. Cleaning appliance according to claim 1 or 2, **characterised in that** the suction nozzle (4) is arranged in front of the steering shaft (15).

4. Cleaning appliance according to claim 3, further comprising a device (5, 6, 7) for lifting the suction nozzle (4) of the suction device (3), in particular in the form of an actuating rod (6) or a Bowden cable.

5. Cleaning appliance according to claim 4, **characterised in that** the device (5, 6, 7) for lifting the suction nozzle (4) can be operated via an actuating element (6) coupled to the steering rod (16).

6. Cleaning appliance according to any of the preceding claims, further comprising a flexible suction hose (8) between suction nozzle (4) and suction device (3), which is releasably fixed to the chassis (1) by means of holding clips (9).

7. Cleaning appliance according to claim 6, the suction hose (8) being releasably fixed to the platform (17) of the scooter (1).

8. Cleaning appliance according to any of the preceding claims, further comprising a coupling device (11) between scooter (1) and suction device (3) at the rear of the scooter (1) in the direction of travel.

9. Cleaning appliance according to claim 8, the suction device (3) having two rigid wheels (10) as well as a swivel wheel and being connected to the scooter (1) in such a way that the swivel wheel (17) has no contact with the floor.

10. Cleaning appliance according to claim 8 or claim 9, **characterised in that** the coupling device (11) comprises two eccentric mounting positions.

11. Cleaning appliance according to any of claims 8 to 10, **characterised in that** the coupling device (11) comprises a ball pin.

12. Cleaning appliance according to any of the preceding claims, **characterised in that** the scooter (1) has in addition a steering rod (15) which can fold down relative to the platform (17).

## Revendications

1. Appareil de nettoyage, comprenant un aspirateur (3) ; un appareil de traction (1) sur roues (14) orientable, entraîné par la force musculaire, l'aspirateur (3) étant déplaçable sur des roues (10) et relié à l'appareil de traction (1) ; et une buse d'aspiration (4) dans la zone de l'axe de direction (15) de l'appareil de traction (1) ;
**caractérisé en ce que**
l'appareil de traction (1) est une patinette (1) avec un axe de direction (15) et un guidon (16) ; et
l'aspirateur (3) est entraîné par batterie.

2. Appareil de nettoyage selon la revendication 1,
**caractérisé en ce que**
la patinette (1) comprend deux roues avant (14).

3. Appareil de nettoyage selon la revendication 1 ou 2,
**caractérisé en ce que**
la buse d'aspiration (4) est disposée devant l'axe de direction (15).

4. Appareil de nettoyage selon la revendication 3, comprenant en outre un dispositif (5, 6, 7) pour soulever la buse d'aspiration (4) de l'aspirateur (3), en particulier réalisé sous la forme d'une barre d'actionnement (6) ou d'un câble d'actionnement.

5. Appareil de nettoyage selon la revendication 4,
**caractérisé en ce que**
le dispositif (5, 6, 7) pour soulever la buse d'aspiration (4) est actionnable par l'intermédiaire d'un élément d'actionnement (6) couplé au guidon (16).

6. Appareil de nettoyage selon l'une des revendications précédentes, comprenant en outre un tuyau d'aspiration (8) flexible, entre buse d'aspiration (4) et aspirateur (3), fixé de manière désolidarisable sur l'appareil de traction (1) à l'aide d'étriers de maintien (9).

7. Appareil de nettoyage selon la revendication 6, le tuyau d'aspiration (8) étant fixé de manière désolidarisable sur le repose-pied (17) de la patinette (1), à l'aide d'étriers de maintien (9).

8. Appareil de nettoyage selon l'une des revendications précédentes, comprenant en outre un dispositif d'attelage (11) entre patinette (1) et aspirateur (3), placé derrière sur la patinette (1), en observant dans la direction de roulage.

9. Appareil de nettoyage selon la revendication 8, l'aspirateur présentant deux roues (10) à montage rigide ainsi qu'une roue à orientation pivotante, et étant relié à la patinette (1) de manière que la roue à orientation pivotante (17) n'ait aucun contact avec le sol.

10. Appareil de nettoyage selon la revendication 8 ou la revendication 9,
**caractérisé en ce que**
le dispositif d'attelage (11) comprend deux positions de montage excentriques.

11. Appareil de nettoyage selon l'une quelconque des revendications 8 à 10,
**caractérisé en ce que**
le dispositif d'attelage (11) comprend un pivot sphérique.

12. Appareil de nettoyage selon l'une des revendications précédentes,
**caractérisé en ce que**
la patinette (1) présente en plus une barre de direction (15) susceptible d'être rabattue par rapport à la surface de repose-pied (17).
